# EUROPEAN PATENT APPLICATION

(11) **EP 4 192 060 A1**
(43) Date of publication of application: **07.06.2023**
(21) Application number: 21383084.7
(22) Date of filing: 01.12.2021
(51) Int. Cl.: H04W 8/18

(54) **MANAGEMENT OF SUBSCRIBER PROFILES ON AN EUICC**

(71) Applicant: Giesecke+Devrient Mobile Security GmbH, 81677 München (DE)
(72) Inventor: Garcia Farrés, Andreu, 08192 Sant Quirze del Vallès (ES); Moron, Oriol, 08720 Vilafranca del Penedes (ES)
(74) Representative: Giesecke + Devrient IP

(57) **Abstract**

The present invention relates to methods, devices, and computer program products for managing subscriber profiles on an eUICC 130. Within that context, a method for managing subscriber profiles stored in an eUICC 130 comprises an ISD-R 131 and an API 132 implemented on the eUICC 130, the API 132 providing for executing or executing via the ISD-R 131 a profile management operation concerning a subscriber profile of the eUICC 130. Further, an application 133 installed on the eUICC 130 instructs the API 132 to execute the profile management operation concerning the subscriber profile. The invention further relates to an according eUICC 130, a device 150 having embedded therein a eUICC 130 and computer program products representing the API 132 and the application 133.

## Description

The present invention relates to embedded secure elements, such as embedded Universal Integrated Circuit Cards, eUICCs, and more particularly to managing subscriber profiles on an eUICC.

### BACKGROUND OF THE INVENTION

Recently, mobile devices configured to employ electronic subscriber profiles for communicating on mobile networks have emerged. Such mobile devices are typically equipped with electronic/embedded secure element devices, such as electronic/embedded universal integrated circuit cards (eUICCs), configured to store one or more electronic subscriber profiles such as electronic subscriber identification module (eSIM) profiles that may allow mobile devices to connect to one or more mobile networks. A subscriber profile (e.g., an eUICC or eSIM profile) may be generated by a mobile network operator (MNO), installed on a secure element of the mobile device and used for communication over a corresponding mobile network by the mobile device.

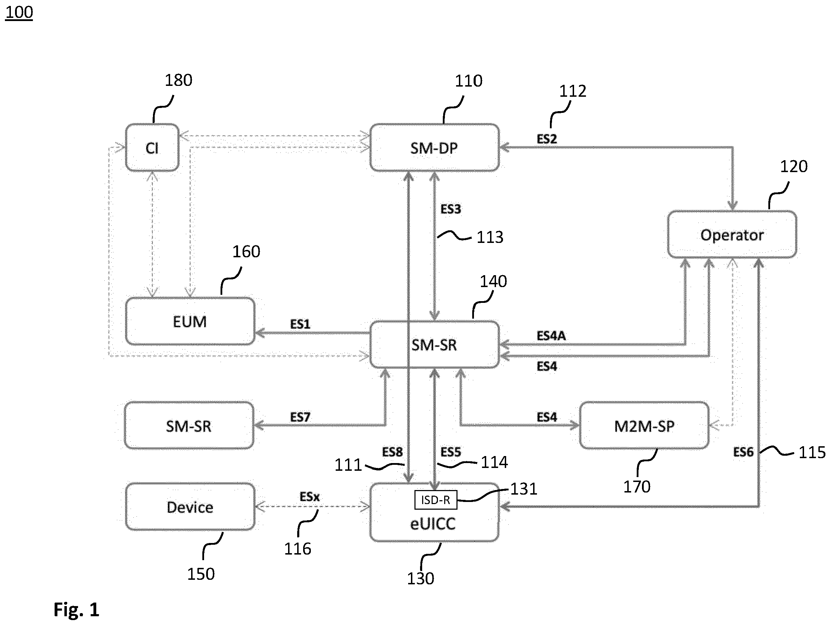

The management of profiles installed on the eUICC, including e.g. downloading, installing, content update or security checks of profiles, is performed by various instances and through different interfaces of an infrastructure illustrated in FIG. 1. It shows a simplified representation of the architecture of a remote eUICC provisioning system as described in SGP.02, "Remoter Provisioning Architecture for Embedded UICC Technical Specification", Version 4.2, issued by the GSM Association. The eUICC provisioning system 100 is organized around several elements: the SM-DP (Subscription Manager Data Preparation server, 110), the SM-SR (Subscription Manager Secure Routing server, 140), and the eUICC, 130, the latter being part of a mobile device 150 of an end user. The eUICC 130 is manufactured by the EUM (eUICC Manufacturer, 160), also referred to as card vendor, who installs the ISD-R (Issuer Security Domain Root, 131) during manufacture of the eUICC 130 as an on-card interface to and representative of the off-card SM-SR 140.

The SM-DP 110 is responsible for the download while the SM-SR 140 is responsible for creation, remote management (enable, disable, update, delete) and protection of subscriber profiles provided by the MNO (mobile network operator, 120). The M2M-SP (Machine to Machine Service Provider server, 170) relies on the MNO 120 to provide subscriber profiles to the eUICC 130 and interacts with the SM-SR 140 to also provide certain remote profile management capabilities that, however, do not affect profile content update.

The profiles are loaded into the eUICC 130 by the SM-DP 110 and managed by the SM-SR 140 in the eUICC 130 (e.g., by appropriate commands) either directly through the channel or interface ES8 (i.e., channel 111 into the eUICC 130) or indirectly through e.g. the channel or interface ES3 (i.e., channel 113 into the SM-SR 140) and the channel or interface ES5 (i.e., continuation 114 of ES3 to reach further into the eUICC 130). Further, through the channel or interface ES6 identified by reference numeral 115 in Fig. 1, the MNO 120 can also initiate changes to profiles loaded onto the eUICC 130.

The profile management options addressed so far are all initiated by or via external servers, while none of those capabilities is under the control of the eUICC 130 with profiles or of a device 150 having embedded therein the eUICC 130 and/or at the disposal of the EUM 160 or vendor of such eUICC 130. Particularly, the profile management functions 114 provided via the ES5 interface is required to be triggered by the off-card SM-SR 140.

An additional option provided by the GSMA SGP.02 specification referred to above which enables profile management through or via a device 150, is via channel or interface ESx identified by reference numeral 116 in FIG. 1. Such profile management/switch capabilities on the device side are, however, very limited and merely include enable/disable of emergency or test profiles.

Besides that, the GSMA SGP.02 specification does neither define any other profile switch options based on device input, nor does it provide definitions based on which EUM / eUICC vendors 160 can implement automatic profile switch routines to address a lack or loss of connectivity, causing UICC manufacturers/vendors 160 to implement individual, non-standard automatic profile switch routines, which imposes the usual negative consequences of proprietary solutions.

On the other hand, customers increasingly require UICC manufacturers/ vendors 160 to implement customized profile switch routines which would require re-certification of functions that have already been certified by the CI (certification issuer), identified by reference numeral 180 in FIG. 1.

It is therefore desirable to provide an update mechanism for eUICC profiles which addresses the above-mentioned drawbacks.

### SUMMARY OF THE INVENTION

The present invention addresses the above object by the subject-matter covered by the independent claims. Preferred embodiments of the invention are defined in the dependent claims.

According to a first aspect of the present invention, there is provided a method for managing subscriber profiles stored in an embedded universal integrated circuit card, eUICC, which, among further standard components, comprises an issuer security domain root component, ISD-R. On the eUICC there is implemented an application programming interface, API, that provides for executing via the ISD-R or executes via the ISD-R a profile management operation concerning a subscriber profile of the eUICC. The profile management operation is then executed by the ISD-R though accessing the operating system, OS, of the eUICC.

The API thus acts as an on-card interface to the ISD-R via which profile management operations can be instructed or requested by any entity, particularly by entities other than the remote SM-DP or SM-SR servers specified by GSMA SGP.02 specification. Such entities that can instruct profile management operations by addressing the IDS-R via the API particularly are applications installed on the eUICC or on a device having the eUICC embedded therein. The API according to the present invention, therefore, provides at least one method or routine that can be called by an entity, e.g. by an application installed on the eUICC, to execute a profile management operations concerning a subscriber profile of the eUICC.

While according to the GSMA SGP.02 specification the profile management capabilities of the ISD-R are accessible only via the off-card servers such as the SM-SR, the present invention opens another way of accessing profile management capabilities provided by the ISD-R, namely through an on-card API, representing an interface via which an application can instruct profile management operations to be executed by the ISD-R. The proposed solution therefore provides alternative, more flexible and wider accessible options for profile management as allowed by the GSMA SGP.02 specification. Particularly, the API allows for implementing new functionalities based on new use cases and adapt or customize existing functionalities to meet changing customer expectations without the need for re-certification through the CI. The API even allows to a certain extend to fix errors in the behavior to the OS without having to re-certify the OS.

According to some embodiments of the present invention, the API is implemented on the eUICC as a JavaCard interface accessible by a JavaCard applet being installed on the eUICC as an application. This allows for providing JavaCard applets with access to any profile management operations provided by the ISD-R according to the GSMA SGP.02 specification.

According to the GSMA SGP.02 specification, specific profile management functions are accessible via the ES5 interface by the SM-SR, via the SE6 interface by the MNO, via the ES8 interface by the SM-DP, and via the ESx interface by a device in which the eUICC is embedded. By the API according to the present invention theses profile management functions are all made potentially accessible to an application installed on the eUICC, such as a JavaCard applet. That is, since these profile management functions have up to now been available only to the limited entities specified by the GSMA SGP.02 specification, such as the SM-SR, SM-DP, or MNO, the present invention makes them also available to applications locally installed on the eUICC or on the device that can instruct the API to execute profile management operations that perform those profile management functions that up to now are accessible only to the specified remote entities / servers.

This particularly provides for new and/or more flexible profile management operations under the control of the device in which the eUICC is embedded and/or at the disposal of the of the EUM or issuer or vendor of the eUICC. By this, for instance, the device is not any more limited to enabling/disabling emergency or test profiles but gains access to any profile management with respect to operational profile, including profile switch. In this regard, the preset invention also provides EUM and eUICC vendors with access to automatic profile management, which the GSMA SGP.02 specification does not provide for.

The profile management operations that, according to the present invention, are provided by the API particularly include activation and deactivation of subscription profiles. Further, the API provides for retrieving a status of a subscription profile and to changing the content of a profile or switching a profile stored in the eUICC.

Particularly, those profile management functions that according to the GSMA SGP.02 specification are accessible via the ES5 interface and have to be triggered by the SM-SR, e.g. enabling or disabling profiles, are, according to the present invention, made available by the API to be triggered by an application locally installed on the eUICC.

Further, the API provides for profile switch operations that are automatically triggered by events detected on or by the eUICC, rather than by a remote server. Such automatic switch operations include for example a FALLBACK operation upon loss of connectivity to an active profile, a ROLLBACK operation upon a lack of connectivity to a just enabled profile, a FALLBACK FROM ROLLBACK operation upon lack of connectivity after a rollback operation, and a SWITCHBACK operation for restoring a profile that was disabled by a fallback operation.

By provision of profile switch operations via the API, the present invention helps to standardize how eUICC vendors and manufacturers implement automatic profile switch operations, e.g. by means of an individual application provided on the eUICC. Further, eUICC vendors and manufacturers can implement their automatic switch operations based on device input without the need to re-certification.

In some embodiments an application is installed on the eUICC that instructs the API to execute profile management operations concerning subscriber profiles stored on the eUICC dependent on whether or not predetermined criteria are met or events occur. If such criteria are met or events occur the application instructs the API to execute as the profile management operation a profile change operation concerning the subscriber profile. That way an application or JavaCard applet can trigger, e.g., profile change requests based on criteria implemented in or controlled by the application or applet itself, so that the application itself - and therefore the provider of that application -, rather than a remote server, controls the conditions under which an automatic profile change may be executed.

In some embodiments, the application is provided and/or installed on the eUICC by an issuer or manufacturer of the eUICC or by an issuer or manufacturer of the device in which the eUICC is embedded. This allows for new use cases involving such application providers because they can, via the provided application, control profile management and profile switch operations and the conditions under which the API is instructed to execute such operations.

An application that instructs the API to execute profile switch operations can, according to a particular embodiment, to a certain extent re-implement the functionality of automatic switch functions provided by the ISD-R and/or the OS. For example, the application can add further conditions under which a FALLBACK operation is executed in order to address an error in the behavior of the OS or according to a particular use case.

In some embodiments, two or more applications are installed on the eUICC, for example in that the eUICC issuer and a mobile device manufacturer in which the eUICC is embedded each provide individual applications that implement specific use cases. Such applications may independently instruct the API to execute different profile management operations concerning different subscriber profiles in order to process the respective use case.

In some embodiments, the device in which the eUICC is embedded requests the application to instruct via the API a profile management operation. After the operation has been processed by the ISD-R and the operating system of the eUICC, the application receives from the API a response to the instructed profile management operation and forwards the response and/or data derived from the response to the device. Data derived from a response provided by the API may for example include a profile or card status, such as the current subscription management card status that the device requires for its own operations.

Within this context the device and the application establish a direct communication via which, for example, the device can trigger a profile switch by requesting the application, e.g. by sending a respective command, to instruct the API to execute the respective profile switch operation.

According to a second aspect of the present invention, an embedded universal integrated circuit card, eUICC, is provided that comprises an issuer security domain root component, ISD-R, and has stored therein at least one subscriber profile. On the eUICC an application programming interface, API, is implemented that is configured to provide for executing or to execute via the ISD-R a profile management operation concerning the at least one subscriber profile. An application may be installed on the eUICC that is configured to instruct the API to execute the profile management operation concerning the at least one subscriber profile.

Generally, the API is configured to realize or be involved in a method according to the first aspect and also the application is configured to realize or be involved in a method according to the first aspect.

The API is configured to process profile management operations instructed by the application that relate to activation or deactivation of the subscription profile or to retrieval of a status or to switch of a subscriber profile, while the application is configured to instruct such profile change operations if predetermined criteria are met that are implemented in the application itself.

According to an actual use case, the application is installed on an eUICC that is embedded in a device and the application is configured to be functionally dedicated to the use case defined by or involving an issuer or manufacturer of the eUICC or an issuer or manufacturer of the device. In order to realize the uses case within that setting, the application is preferably configured to, on the one hand, process a command received from the device by which the device requests the application to instruct a profile management operation via the API and, on the other hand, to receive from the API a response to the instructed profile management operation and forward the response or data derived therefore to the device.

According to a third aspect of the present invention, a device having embedded therein an eUICC according to the second aspect is provided, the eUICC being configured to realize a method according to the first aspect. Preferably, such device is a mobile or terminal device, such as an M2M device, a telecommunication device or mobile phone, a personal or tablet computer or the like.

According to a fourth aspect of the present invention, a computer program product representing an API implementable on an eUICC according to the second aspect is provided. The computer program product comprises instructions which, when executed on the eUICC, realizes the run-time behavior of an API that is involved in and/or causes the eUICC to carry out a method according to the first aspect of the present invention. Preferably, the computer program product according to the fourth aspect is a JavaCard interface.

According to a fifth aspect of the present invention, a computer program product representing an application implementable on an eUICC according to the second aspect is provided. The computer program product comprises instructions which, when executed on the eUICC, to realize the run-time behavior of an application that is involved in and/or causes the eUICC to carry out a method according to the first aspect. Preferably, the computer program product according to the fifth aspect is a JavaCard applet.

It has to be noted that all the devices, elements, units, entities, and means described in the present application could be implemented in software or hardware elements or combination thereof. All steps which are performed by the various entities described in the present application as well as the described functionalities are intended to mean that the respective entity is adapted to or configured to perform the respective steps and functionalities.

Further aspects, features and advantages of the present invention will become apparent to those of ordinary skills in the art upon reviewing the following detailed description of preferred embodiments and variants of the present invention in conjunction with the accompanying figures.

### BRIEF DESCRIPTION OF THE DRAWINGS

Reference will now be made to the accompanying figures, in which
- FIG. 1: shows a schematic structural diagram of an eUICC profile management system;
- FIG. 2: shows a schematic illustration of a device and an eUICC according to the preset invention; and
- FIG. 3: shows a flow chart of a method for managing subscriber profiles stored in an eUICC according to the preset invention.

### DETAILED DESCRIPTION

Detailed explanations of the present invention are given below with reference to attached drawings that illustrate specific embodiment examples of the present invention. These embodiments are described in sufficient detail to enable those skilled in the art to practice the invention. It is to be understood that the various embodiments of the present invention, although different, are not necessarily mutually exclusive. For example, a particular feature, structure, or characteristic described herein in connection with one embodiment may be implemented within other embodiments without departing from the scope of the present invention. In addition, it is to be understood that the position or arrangement of individual elements within each disclosed embodiment may be modified without departing from the scope of the present invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

Throughout this specification, the term "eUICC" is understood as an integrated circuit, IC, that is intended to securely store at least one subscription profile having profile data. A subscription profile in an eUICC may host an international mobile subscriber identity number, IMSI, a unique serial number, ICCID, cryptographic encryption/decryption keys, security authentication and ciphering information, temporary information related to the local network, a list of the services a user has access to, and at least two passwords: A personal identification number (PIN) for ordinary use, and a personal unblocking code (PUK) for PIN unlocking, which are used to uniquely identify and authenticate a subscriber on a terminal device, such as an M2M device, a mobile phone, a personal or tablet computer or the like. In addition, a profile in an eUICC may contain a profile name or identifier.

The present invention proposes a mechanism for managing subscriber profiles stored in an embedded universal integrated circuit card, eUICC, 130 that comprises an issuer security domain root component, ISD-R, 131 as well as an application programming interface, API, 132. The capabilities of the ISD-R 131 are defined in the GSMA SGP.02 specification addressed above.

The API 132 is implemented on the eUICC 130 and forms an interface to the ISD-R 131. It provides for executing or executes via the ISD-R 131 profile management operations concerning a subscriber profile stored in the eUICC 130. Within this context, "providing for executing an operation" means that the API provides methods or routines to be called by an application or functions to be accessed by an application that, when called or accessed, cause execution of the operation implemented by that method, routine, or function. The term "executing an operation", on the other hand, means that the operation is executed as a result of an interaction of the API 132 with one or more other components of the eUICC 130, for instance the ISD-R 131 and/or an operating system 135 of the eUICC 130.

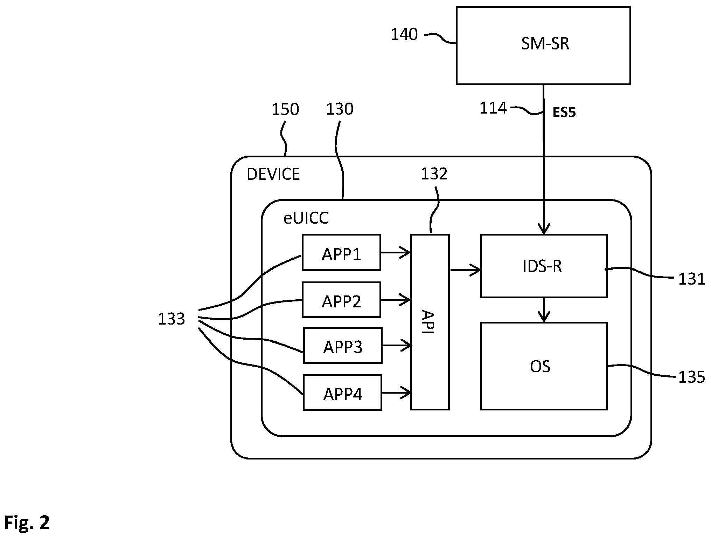

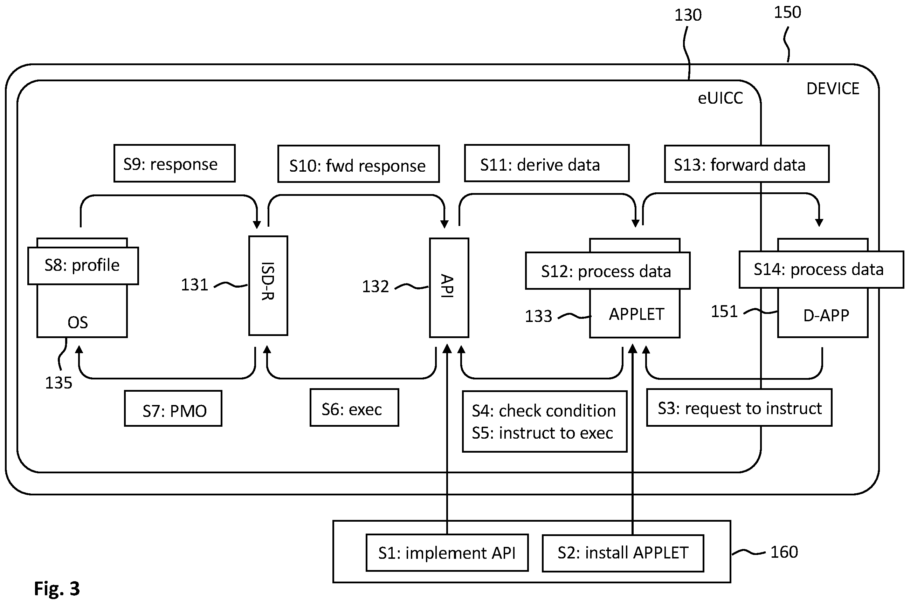

FIG. 2 shows a device 150 with an eUICC 130 embedded therein that is configured to carry out the profile management method according to the present invention as sketched in FIG. 3. The eUICC 130, embodying the present invention in the way described below, is operable within the profile management framework according to FIG. 1.

With reference to FIG. 2, the eUICC 130 comprises the ISD-R 131 as the on-card representative of the off-card Subscription Manager Data Preparation, SM-SR, 140. Via the SM-SR 140 and the channel ES5, a Mobile Network Operator, MNO, 120 can trigger profile management functions 114 according to GSMA SGP.02 specification, such as "Enable Profile", "Disable Profile", Delete Profile", that do not affect the content of a profile and that are then performed by the IDS-R 131 in cooperation with the operating system, OS, 135 of the eUICC 130.

Further, the eUICC 130 comprises an Application Programming Interface, API, 132, that is implemented as a separate entity and as an interface to provide one or more applications 133 (APPx) with access to functions and capabilities of the ISD-R 131. Since the eUICC 130 and the OS 135 operate under JavaCard, the API 132 is implemented as a JavaCard interface and the applications 133 are installed as JavaCard applets. As regards the interaction between the API 132 and an application 133, the API 132 implements methods and routines that can be called by the application 133.

The multiple applications 133 depicted in FIG. 2 (APPx) and the singular application 133 depicted in FIG.3 (APPLET) are all external applications that use the API 132 and that can be installed on or loaded onto and deleted from the eUICC 130 by different external entities such as issuers or manufacturers of the eUICC or of the device in which the eUICC 130 is embedded. Besides that, applications 133 can also be developed and installed on the eUICC 130 by other entities, e.g. by the MNO 130, by customers of an eUICC/device issuer or manufacturer, or by further service providers, thus providing case-dependent individual access to profile management operations to such entities. Therefore, development of an application 133 will usually be dedicated to a certain use case defined by or involving the application developer.

An example of a use case of a device manufacturer is the following: Devices 150, such as mobile phones or other communication devices, usually comprise GPS capabilities and thus constantly store information regarding the quality of coverage of network zones by different MNOs 120. Therefore, a device 150 comprising an eUICC 130 according to the invention may, e.g. by way of a device application 151 installed thereon, send a respective command to an application 133 of the device manufacturer when network coverage requires switching the active profile, so as to be able to operate under the MNO 120 with the best coverage at the current location.

With reference to FIG. 3, steps S1 and S2 represent implementing the API 132 and installing one or more applications 133 on the eUICC 130, respectively. While the API 132 is implemented by an issuer or manufacturer, EUM, 160 of the eUICC 130 (step S1), applications 133 that instruct profile management operations via the API 132 and the ISD-R 131 may be installed by various entities, such as by an eUICC issuer or manufacturer 160, an issuer or manufacturer of the device 150, an MNO 120 or, depending on the actual use case that shall be operated, even a commercial service provider, such as a bank, an loT operator or the like.

The further steps S3 to S14 illustrate process cycles for execution of a profile management operation according to the invention. The actual manipulation or access of a profile in reaction to a profile management operation, PMO, is performed in step S8, whereas steps S3 to S7 relate to the instruction and execution of the PMO and steps S9 to S14 relate to handling the response received in reply to the actual profile manipulation or access in step S8.

According to the present invention, performing a profile management operation via the API 132 can be initiated by either an application 133 (APPLET) installed on the eUICC 130 or a device application 151 (D-APP) installed on the device 150 by a device issuer or manufacturer. In the former case, the process cycle begins with step S4 and ends with step S12, while in that latter case the process cycle begins with step S3 and ends with step S14. Another possible process cycle which is not illustrate in FIG. 3 may begin with step S3 and end with step S14 but omit steps S4, S5, S11 performed by the application 133. According to that embodiment, the device application 151 entirely replaces the eUICC application 133 and directly interacts with the API 132. In such a scenario, the step of checking conditions for instructing a PMO (step S4) may be performed by the device application 151 before actually instructing the PMO vis-à-vis the API 132 in step S3.

In step S3, the device application 151 requests the application 133 to instruct a particular profile management operation, PMO. As explained above, this step, as well as steps S13 and S14, is omitted if the profile management operation is initiated by the application 133 without the involvement of the device.

In step S4, the application 133 checks whether certain conditions are met and, if they are met, instructs the API 132 in step S5 to execute the PMO. While the API 132 provides for execution of the PMO by means of methods or routines to be called or functions to be accessed, the application 133 calls such method or routine of the API 132 to instruct for execution of the PMO. Via the condition check in step S4, the application 133 triggers the PMO based on criteria implemented in the application 133 itself, i.e. based on criteria the application 133 or a local component of the eUICC 130, e.g. the OS 135, controls, can detect and/or can adapt.

In this regard, the instruction of a profile management operation in step S5 can also be subject to the determination of the occurrence of a predetermined OS events in step S4. In that case the respective application 133 is registered with OS events so that the OS 135 notifies the application 133 upon occurrence of one or more particular events so as to conclude step S4 based on the detected event.

By step S5, for instance, a profile switch operation can be instructed as a profile management operation. According to the GSMA SGP.02 specification, local profile switch functions 116 triggered by the device 150 are limited to emergency and test profiles and do not cover switch of actual operable profiles. The preset invention, however, allows for instructing automatically and/or conditionally switching operable profiles by applications 133 in step S5. Such profile switch operations may include
(a) FALLBACK: upon loss of connectivity to an active profile;
(b) ROLLBACK: upon a lack of connectivity to a just enabled profile;
(c) FALLBACK FROM ROLLBACK: upon lack of connectivity after a ROLLBACK; or
(d) SWITCHBACK: for restoring a profile that was disabled by a FALLBACK.

The switch operations (a) to (d) are all triggered by applications 133 installed on the eUICC 130, thus overcoming the disadvantages of the solutions provided by the GSMA SGP.02 specification.

Since there may be installed several applications 133 on the eUICC 130, for instance, inter alia, one application 133 for each available MNO 120, each of those applications 133 may impose in step S4 different conditions for instructing a profile switch. For example, a FALLBACK may be instructed in step S5 only if it is verified in step S4 that a predetermined number of status requests have failed or delivered undesirable results.

Likewise, applications 133 may apply different conditions in step S4 to instructing a FALLBACK in step S5, for example the following:
- APP1:: FALLBACK when a timer has expired;
- APP2:: FALLBACK when a particular status X is detected;
- APP3:: no FALLBACK if the main profile of a MNO is active;
- APP4:: unconditional FALLBACK to a different profile each time.

In step S6, the API 132, being an interface to the ISD-R 131, executes the called method or routine and, by that, causes the ISD-R 131 in step S7 to finally execute the PMO using certain capabilities of the OS 135, while the actual profile manipulation or profile access is performed in step S8.

In step S9, the response of the OS 135 to the profile manipulation / access is received by the ISD-R 131 and, in step S10, forwarded to the API 132.

In step S11, the API 132 extracts information or derives data from the response received from the ISD-R 131. The derived data is either processed by the application 133 in step S12 or forwarded to the device application 151 in step S13 and then processed by the device application 151 in step S14.

In case one of the forementioned profile switch operations is instructed by the application 133 in step S5, the response provided to the application 133 through steps S9 and S10 may include a flag indicating whether the profile switch was successful or data relating to the newly activated profile, for instance an identifier, its operational status, a time stamp or the like. In that case, the application 133 derives such data from the response in step S11 and processes it in step S12, for example in that the data is used as the basis of instruction another conditional operation by steps S4 and S5.

If, for instance, in step S5 a PMO is instructed by the application 133 (or requested by the device application 151) according to which the current subscription management status shall be retrieved, such status is derived from the response in step 11 and then processed by the application 133 in step S12 (or forwarded in step S13 an processed by the device application 151 in step S14).

The methods provided by the API 132 and to be called by applications 133 particularly relate to requesting profile information, such as GET INFORMATION, GET EMERGENCY PROFILE, GET FALLBACK PROFILE or the like. If such methods are called by an application 133 in step S5, the application 133 will obtain in step S11 profile states or attributes that reveal which profiles are active and then can form, based on a data processing in step S12, the basis for a decision as to which profiles shall be deactivated, activated or switched by an instruction according to step S5.

The methods provided by the API 132 also relate to operations like ENABLE, SWITCHBACK, FALLBACK based on which the application 133 can force profile operations in step S5. Methods provided by the API 132 include, but are not limited to, the following:
DEREGISTER - de-register events;
E CALL OFF - disable emergency profile and enable previous profile;
E CALL ON - enable emergency profile;
ENABLE PROFILE - enable a profile;
FALLBACK - fallback to a given profile;
GET CURRENT ENABLED PROFILE - get the currently enabled profile;
GET CURENT MODE - get the mode currently operated by the eUICC;
GET EID - retrieve EID of the eUICC;
GET EMERGENCY PROFILE - retrieve the emergency profile;
GET FALLBACK PROFILE - retrieve the current fallback profile
GET INSTANCE - retrieve an instance to access API methods;
GET LAST CONFIRMED PROFILE - retrieve the last confirmed profile;
GET NEXT PROFILE - iterate along a list of profiles;
GET TEST PROFILE - retrieve the test profile;
REGISTER - register an event to notify requester when event is triggered;
SWITCHBACK - switchback operation to the given profile.

In conclusion, the options provided by the above-disclosed invention overcome the limitations of profile management of the GSMA SGP.02 specification. The present invention and the related embodiments provide an API 132 that provides profile management operation so that applications 133 or applets can perform arbitrary profile management, profile change, and profile switch operations entirely based on on-card conditions and independent on any remote entities. As a consequence, arbitrary use cases can be defined by accessing the API 132 and implemented under the full control of applications 133 and applets installed in the eUlCC 130.

In the foregoing specification, the invention has been described with reference to specific embodiments thereof. It will, however, be evident that various modifications and changes may be made thereto without departing from the broader scope of the invention. For example, the above-described process flows are described with reference to a particular ordering of process actions. However, the ordering of many of the described process actions may be changed or additional process actions may be involved without affecting the scope or operation of the invention. The specification and drawings are, accordingly, to be regarded in an illustrative rather than restrictive sense.

## Claims

1. Method for managing subscriber profiles stored in an embedded universal integrated circuit card, eUICC, (130) comprising an issuer security domain root component, ISD-R, (131), **characterized in that** an application programming interface, API, (132) is implemented on the eUICC (130) that provides for executing or executes via the ISD-R (131) a profile management operation concerning a subscriber profile of the eUICC (130).

2. The method according to claim 1, **characterized in that** the API (132) is implemented on the eUICC (130) as an interface to the ISD-R (131) and provides for executing via the ISD-R (131) a profile management operation that performs a profile management function defined in the GSMA SGP.02 Specification "Remote Provisioning Architecture for Embedded UICC", whereas
according to the GSMA SGP.02 Specification said profile management function being instructed via the ES5 interface (114) and/or via the ES8 interface (111) and/or via the ESx interface (116).

3. The method according to claim 1 or claim 2, **characterized in that** the API (132) provides for executing or executes via the ISD-R (131) a profile management operation that activates or deactivates the subscription profile, that retrieves a status or switches a subscriber profile stored in the eUICC (130).

4. The method according to any one of the previous claims, **characterized in that** the API (132) provides for executing or executes a profile management operation in relation to a FALLBACK operation, a ROLLBACK operation, or a FALLBACK FROM ROLLBACK operation addressing a loss of connectivity on the subscriber profile, or a SWITCHBACK operation activating the subscriber profile.

5. The method according to any one of the previous claims, **characterized in that** an application (133) is installed on the eUICC (130), the application (133) instructing the API (132) to execute the profile management operation concerning the subscriber profile.

6. The method according to claim 5, **characterized in that** the application (133) checks if predetermined criteria are met and, in the affirmative, instructs the API (132) to execute as the profile management operation a profile change operation concerning the subscriber profile.

7. The method according to claim 5 or claim 6, **characterized in that** at least one further application is installed on the eUICC (130), whereas the application (133) and the at least one further application instructing the API (132) to execute different profile management operations concerning one or more subscriber profiles stored in the eUICC (130).

8. The method according to any one of claims 5 to 7, **characterized in that** the application (133) is associated to an issuer or manufacturer (160) of the eUICC (130) or to an issuer or manufacturer of a device (150) in which the eUICC (130) is embedded, and instructs the API (132) to execute profile management operations in relation to a use case defined by or involving the issuer or manufacturer (160) of the eUICC (130) or the issuer or manufacturer of the device (150).

9. The method according to any one of claims 5 to 8, **characterized in that** the application (133), being a JavaCard applet, calling a method provided by the API (132), being a JavaCard interface, thereby instructing the API (132) to execute the profile management operation.

10. The method according to any one of claims 5 to 9, **characterized in that** a device (150), in which the eUICC (130) is embedded, requests the application (133) to instruct via the API (132) the profile management operation and that the application (133) receives from the API (123) a response to the instructed profile management operation and forwards the response and/or data derived from the response to the device (150).

11. Embedded universal integrated circuit card, eUICC (130), having stored therein at least one subscriber profile, the eUICC (130) comprising an issuer security domain root component, ISD-R, (131), **characterized in that** on the eUICC (130) an application programming interface, API, (132) is implemented, the API (132) being configured to provide for executing or to execute via the ISD-R (131) a profile management operation concerning the at least one subscriber profile.

12. The eUICC (130) according to claim 11, **characterized in that** on the eUICC (130) an application (133) is installed, the application (133) being configured to instruct the API (132) to execute the profile management operation concerning the at least one subscriber profile.

13. The eUICC (130) according to claim 12, **characterized in that** the application (133) is associated to an issuer or manufacturer (160) of the eUICC (130) or to an issuer or manufacturer of a device (150) in which the eUICC (130) is embedded, and is configured to be functionally dedicated to a use case defined by or involving the issuer or manufacturer (160) of the eUICC (130) or the issuer or manufacturer of the device (150).

14. The eUICC (130) according to any one of claims 11 to 13, **characterized in that** the API (132) is configured to realize or be involved in a method according to any one of claims 1 to 10 and/or the application is configured to realize or be involved in a method according to any one of claims 5 to 10.

15. A device (150) having embedded therein an embedded universal integrated circuit card, eUICC, (130), according to any one of claims 11 to 14, the eUICC (130) being configured to realize a method according to any one of claims 1 to 10, the device (150) preferably being a mobile or terminal device.

16. A computer program product representing an application programming interface, API, (132) that is implementable on an embedded universal integrated circuit card, eUICC, (130), according to any one of claims 11 to 14, the computer program product comprising instructions which, when executed on the eUICC (130), cause the eUICC (130) to carry out steps of the method according to any one of claims 1 to 10, the computer program product preferably being a JavaCard interface.

17. A computer program product representing an application (133) installable on an embedded universal integrated circuit card, eUICC, (130) according to any one of claims 11 to 14, the computer program product comprising instructions which, when executed on the eUICC (130), cause the eUICC (130) to carry out steps of the method according to any one of claims 5 to 10, the computer program product preferably being a JavaCard applet.
